(19) Europäisches Patentamt
European Patent Office
Office européen des brevets

(11) EP 2 539 388 B1

(12) **EUROPEAN PATENT SPECIFICATION**

(45) Date of publication and mention of the grant of the patent:
**12.08.2015 Bulletin 2015/33**

(21) Application number: **11712363.8**

(22) Date of filing: **25.02.2011**

(51) Int Cl.:
***C08G 65/00*** *(2006.01)*

(86) International application number:
**PCT/US2011/026374**

(87) International publication number:
**WO 2011/106739 (01.09.2011 Gazette 2011/35)**

(54) **POLYFUNCTIONAL POLYGLYCERINE INITIATED POLYETHER POLYOLS AND HIGH RESILIENCE POLYURETHANE SLABSTOCK THEREFROM**

POLYFUNKTIONELLE POLYGLYCERININITIIERTE POLYETHERPOLYOLE UND HOCHELASTISCHER POLYURETHANSCHAUMSTOFFBLOCK DARAUS

POLYÉTHER POLYOLS AMORCÉS PAR UN POLYGLYCÉROL POLYFONCTIONNEL, ET PLAQUE DE POLYURÉTHANE HAUTE RÉSILIENCE OBTENU À PARTIR DE CES POLYÉTHER POLYOLS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2010 US 308268 P**

(43) Date of publication of application:
**02.01.2013 Bulletin 2013/01**

(73) Proprietor: **Dow Global Technologies LLC**
**Midland, MI 48674 (US)**

(72) Inventors:
- **CASATI, Francois, M.**
  **CH-8808 Pfaeffikon (CH)**
- **QUINTANILLA, Esther**
  **NL-4531CR Terneuzen (NL)**
- **VAN DER WAL, Hanno, R.**
  **NL-4542BP Hoek (NL)**
- **MORLEY, Timothy, A.**
  **CH-8810 Horgen (CH)**
- **MULLAERT, Peter**
  **NL-4521BZ Biervliet (NL)**

(74) Representative: **Beck Greener**
**Fulwood House**
**12 Fulwood Place**
**London WC1V 6HR (GB)**

(56) References cited:
**EP-A1- 1 842 866** **US-A- 5 652 279**
**US-A1- 2008 021 154**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 539 388 B1

**Description**

BACKGROUND OF THE INVENTION

This invention relates to polyglycerine initiated polyether polyols with adjustable average functionalities, and more particularly to production of high quality, flexible polyurethane foams produced utilizing such polyether polyols.

The rapid growth of the plant-derived oleochemicals industry in Asia and the growing biodiesel production worldwide have resulted in an abundant supply of glycerin, resulting in substantial lowering of glycerin market price. One possible application of glycerin is the formation of polyglycerine for use as a starter or initiator for polyols, including for example, flexible polyurethane foams. Use of polyglycerine to replace more expensive initiators in polyurethane foam production could lead to cost savings in the production of such foams and improved foam properties.

The properties of polyurethane foams depend strongly upon the foaming and polymerizing efficiencies of the polyol which is in turn governed by the structural properties of the initiator, its functionality and extent of branching, by its equivalent weight (EW), molecular weight distribution (MWD), ratio of ethylene oxide to propylene oxide (EO/PO), primary OH percentage, by-products formed and molar mass. Flexible polyols have functionality, called final or real functionality, which is always lower than the starter or nominal functionality. This is due to side reactions (i.e., monol and diol formations) which occur during the long alkoxylation time needed to get the desired high equivalent weights (e.g., higher than 1000) needed for a flexible foam versus rigid polyols having shorter chains (i.e., equivalent weights).

It is also known that the type of catalyst used for the alkoxylation impacts the degree of side reactions. For instance, KOH gives more side reactions or higher unsaturation (above 0.02 meq/g) than DMC (Double Metal Catalyst) which is used to manufacture polyols with low unsaturation (below 0.02 meq/g). Hence, KOH catalyzed polyols have lower final functionality than DMC catalyzed polyols made from the same initiator having identical nominal functionality.

It is also known that HR (High Resiliency) foams are made with high equivalent weight polyols (higher than 1,500) and that the higher the EW the more pronounced are the side reactions leading to high unsaturations which decrease final functionality.

In general, higher functionality polyols (i.e., having a nominal functionality higher than 3) results in harder foams and low TTE (Tear, Tensile and Elongation) properties. Polyglycerine (polyether) is a high functionality initiator because its functionality is higher than 3, thus giving a high functionality polyol. Usually, when a high functionality polyol is used to produce flexible foams it is combined with a lower functionality polyol. This can be done by blending polyols or, more preferably, by co-initiation of a high functionality (f1) initiator and a low functionality (f2) initiator, for instance by combining sucrose (f1= 8) and water (f2 = 2), or sorbitol (f1= 6) and glycerol (f2 = 3), in order to achieve a nominal functionality between 2 and 4. Thus, to take advantage of the cost savings possibly afforded by use of glycerin to form polyglycerine as an initiator for flexible polyurethane foam production, it would be desirable to produce polyglycerine initiators with adjustable functionality and to produce high equivalent weight polyether polyols from such adjustable functionality polyglycerine in order to optimize foam properties, especially foam TTEs.

U.S. Patent No. 6,710,096 discloses the adjustment of final polyol functionality by use of polyfunctional initiators based on starch hydrolysate and optionally a second initiator thereby not taking advantage of the potential cost savings through use of polyglycerine as the initiator. Those known processes using polyglycerine based polyols as initiators do not provide adjustable functionality but rather depend upon: (1) limiting the level of polyols used in the formulation (i.e., limited to < 50% polyol) (see JP 2005232382; (2) use of the polyglycerine solely as a crosslinker in the formulation (see JP 4010174); or (3) used as hydrophilic polyols for specialty foam applications (JP 44011671).

It is known that the structure of the initiator influences the molecular weight distribution of the final polyol. For instance TMP (trimethylolpropane) having three primary hydroxyls usually gives a more regular distribution of equivalent weights than glycerin which contains a secondary hydroxyl moiety. One characteristic of the polyglycerin chemistry is to allow adjustment of the initiator in terms of primary and secondary hydroxyls, as well as degree of branching, thus to optimize the MWD of the final polyol in order to achieve improved foam properties.

It is also known that polyols having broad molecular weight distributions are undesirable due to their relatively high viscosities, which can aversely impact polyurethane formulations. In addition, it is known that polyols with narrow molecular weight distributions generally result in polyurethanes with better physical properties.

It is further known to produce high functionality polyols with narrow equivalent weight distributions for rigid foams manufactured by using polyglycerine initiators as described in DE 1814923, DE 1109649 and US 20100029799. Rigid foams have closed cells for thermal insulation application and no measurable TTE properties. Such rigid polyols have high viscosities.

It has been surprisingly found that polyglycerines of the present invention provide, when alkoxylated, high molecular weight polyols having relatively low viscosities and when used to produce flexible foams bring improved physical properties, especially improved TTE compared to known co-initiation technology.

Another aspect of the invention provides slabstock flexible polyurethane foams which can be handled and transported without physical damages by foam tearing.

Another aspect of using polyglycerol is that it is a liquid at ambient conditions while conventional high functionality initiators, such as sorbitol and sucrose, are solid making them more difficult to handle in polyol manufacturing plants.

SUMMARY OF THE INVENTION

The invention provides a polyglycerine alkoxylated polyether polyol having an equivalent weight of from 800 to 4,000, wherein the polyether polyol is formed by the base catalyzed addition of an alkylene oxide onto a polyglycerine initiator exhibiting a range of functionalities varying between 2 and 16 and having an average nominal functionality between 3 and 7 formed by the polymerization of glycerine, having an HEW more than 35, wherein the polyether polyol has a final functionality between 1.5 and 6, and an unsaturation between 0.02 meq/g and 1.0 meq/g. Other embodiments of the invention provide flexible polyurethane foams produced using such polyfunctional polyglycerine initiators. Some embodiments of the invention provide flexible polyurethane foams exhibiting improved physical properties (i.e., TTE) as well as improved performance characteristics.

The invention further provides a process for optimizing physical properties of a flexible polyurethane foam by adjusting an average functionality and polydispersity of a polyglycerine initiator, by adjusting processing conditions, by adjusting alkylene oxide composition; or by a combination of any of the foregoing adjustments during production of a polyether polyol used to produce the flexible polyurethane foam. For example, improvements further provided by various embodiments of the invention include optimization of foam processing i.e. foam manufacturing by adjusting polyol average functionality and equivalent weight. In addition, embodiments of the invention provide processes for fine tuning flexible foam properties by providing a polyol with sequential multiple functionalities. That is, some aspects of the invention provide a process for designing, by adjustment of experimental parameters and feed materials, a polyol initiator based on polyglycerine which is used to further design a final polyol by adjustment of alkoxylation conditions.

The invention also provides a process for producing a polyurethane polymer by reaction of a mixture comprising: a polyol comprising between 5 wt% and 100 wt% of the polyglycerine alkoxylated polyether polyol; at least one organic isocyanate; and an amine and/or a metal salt catalyst; optionally in the presence of a blowing agent. In some aspects, the polyol initiator is polyglycerine formed by the glycidol polymerization of glycerine which occurs at temperatures less than 130 °C or polycondensation of glycerine at temperatures higher than 210 °C.

In another aspect of the invention, a flexible polyurethane foam comprising a polyol initiated by the reaction product of a polyglycerine formed by the glycidol polymerization of glycerin, at least one organic isocyanate, and an amine catalyst is provided.

DESCRIPTION OF THE PREFERRED EMBODIMENTS

Embodiments of the invention provide polyglycerine alkoxylated polyether polyols having an average polyol functionality ("final functionality" or "average functionality") that is adjustable by either changing the initiator average functionality ("nominal functionality") or by introducing side reactions during alkoxylation or both. By adjusting the polyol final functionality it is possible to optimize either foaming processability or flexible foam physical characteristics or both.

Embodiments of the present invention are based on controlled polymerization of glycerol thereby producing polyglycerine which is subsequently used as a starter. The inventive process provides polyols with sequential, multiple functionalities. Additionally a range of different equivalent weights is possible due to different reactivities of these initiators with either ethylene oxide, propylene oxide, butylene oxide or other known alkoxylating agents.

In a preferred embodiment of the invention, polyfunctional polyglycerine initiated polyols are produced using polyglycerine produced by the polymerization of glycerin. The glycerin may be of any source and is used to produce polyglycerine with at least 5% and up to 100% of glycerin incorporated into the polyglycerine.

The polyglycerine composition is adjusted during polycondensation by controlling the amount of water released by the reaction, and stopping the reaction when the desired amount is obtained. Free glycerine can be left in the polyglycerine initiator because the polyol is used for flexible foams. Conditions for such a polycondensation are similar to the ones described in US 20090082483.

In another aspect of the invention, glycidol is reacted with glycerin in the presence of an alkaline catalyst, such as KOH, at low temperatures to optimize the formation of the linear product. The nominal functionality of this starter is at least 2 and up to 16. The molar ratio of glycerine to glycidol may range from 1:1 to 1:5.

In alternative embodiments of the invention, the glycerine is reacted with other polyols, such as pentaerythritol or trimethylol propane (TMP), or alternatively amines, such as EDA. Yet other co-reactants may include epoxides, acids, or esters.

In yet other embodiments, the polyglycerine can be reacted with other polyols such as pentaerythritol or TMP, or amines such as EDA. In yet other embodiments of the invention, the polyglycerine may be co-reacted with other functional compounds, such as epoxides, acids or esters.

In yet another embodiment, the polyglycerine initiator is used as a co-initiator with either a polyalcohol, an

aminoalcohol or an amine bearing secondary or primary amine functions, or blends thereof, to manufacture a flexible polyol.

In yet another embodiment, the polyglycerine initiator is made by reacting glycerine and eventually glycidol with an aminoalcohol bearing a tertiary amine moiety able to provide autocatalytic functions for the polyurethane reactions to the polyol, once this polyglycerine-aminoalcohol initiator is alkoxylated. One example of an autocatalytic aminoalcohol useful in certain embodiments of the invention is N-methyl-diethanol amine.

The polyglycerines produced in accordance with embodiments of the invention comprise a minimum of three functionalities. The polyether polyol initiated with polyglycerines has final functionality of between 1.5 and 6, with the exact final functionality tailored to meet the performance requirements of the intended polyether polyol. The inventive polyglycerine alkoxylated polyether polyols have an unsaturation from 0.02 to 1.0 meq/g. The polyol equivalent weight may range from 800 to 4,000.

Polyols may be reacted with isocyanates to form polyurethanes. The glycerin/glycidol polyglycerine based polyether polyols useful in the invention may be used to produce polyurethane foams, comprising between 2% and 100% of the polyol component. Other polyols that can be combined with the polyglycerine polyol are polyether, polyesters and co-polymer polyols, i.e. polyols with in situ polymerization of styrene and acrylonitrile, or PIPA (Polyaddition polyol) or PHD (DolyHarnstoff) polyols.

Any isocyanate can be used (e.g., TDI (toluene diisocyanate), MDI, PMDI, apliphatic isocyanate, etc...), prepolymers, and blends thereof to produce polyurethanes based on polyether polyols using the glycerin/glycidol polyglycerine of the present invention. Resultant foam density may vary between 5 kg/$m^3$ and 500 kg/$m^3$.

Embodiments of the invention provide polyglycerine initiated polyether polyols with adjustable average functionalities and fine tuning of multiple functionalities. The polyols produced in embodiments of the invention may be used in any polyurethane flexible foam application and further provide optimization of foam processing i.e. foam manufacturing by way of adjusting polyol average functionality and equivalent weights. In preferred embodiments of the invention, the polyglycerines exhibit multiple functionality, allowing for the "fine tuning" of flexible foam properties.

The isocyanates which may be used with the polyfunctional polyglycerine initiated polyols of the present invention include aliphatic, cycloaliphatic, arylaliphatic and aromatic isocyanates. Aromatic isocyanates, especially aromatic polyisocyanates are preferred. Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, saturated analogues of the above mentioned aromatic isocyanates and mixtures thereof.

Examples of suitable aromatic isocyanates include the 4,4'-, 2,4' and 2,2'-isomers of diphenylmethane diisocyanate (MDI), blends thereof and polymeric and monomeric MDI blends toluene-2,4- and 2,6-diisocyanates (TDI), biuret modified TDI's, polymerized isocyanates, m-and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

For the production of flexible foams, the preferred polyisocyanates are the toluene-2,4- and 2,6-diisocyanates or MDI isomer blends or combinations of TDI/MDI or TDI/polymeric MDI or prepolymers made therefrom.

For flexible foam, the organic polyisocyanates and the isocyanate reactive compounds are reacted in such amounts that the isocyanate index, defined as the number or equivalents of NCO groups divided by the total number of isocyanate reactive hydrogen atom equivalents multiplied by 100, ranges from 50 to 120 and preferably between 80 and 115.

The polyurethane compositions of the present invention may further comprise other components that are conventionally employed in polymerizable systems. These components include, but are not limited to catalysts, solvents, plasticizers, pigments, colorants, dyes, surfactants, thickeners, heat stabilizers, leveling agents, anti-cratering agents, fillers, sedimentation inhibitors, ultraviolet-light absorbers, and the like. Additives such as promoters, heat stabilizers, ultraviolet-light absorbers, etc. may be intimately dispersed in the reaction mixture and apparently thereby become an integral part of the polymer. Preferred antioxidants are sterically hindered phenolic compounds. Stabilizers such as organic phosphites are also useful. Preferred UV inhibitors are benzotriazole compounds.

Chemistries and processes to produce flexible polyurethane foams by free rise or molding, continuous or discontinuous, are described in "Polyurethane Handbook" by G. Oetel et al, Hanser publisher, 1994.

<u>Test Methods Used</u>

a. Test methods for polyol properties

MALDI-ToF/MS and HPLC-RI were used to determine the amounts and identities of by-products and the molar mass of the examples and comparative examples. HPLC-RI was used to determine the average functionality, equivalent weight (EW), and the mole percentage of hydroxyl groups ("%-OH"). 13C-NMR was utilized to determine the amount of branched end groups and primary OH groups.

High Performance Liquid Chromatography with Refractive Index Detection (HPLC-RI) was performed as follows:
Samples were prepared by dissolution of about 100 mg of the polyglycerine samples in 5 mL of 75/25 acetonitrile/water solution, for all examples and comparative examples except comparative example 2, which was dissolved in a 80/20 mixture of acetonitrile/water mixture.
The mobile phase solution was a 75/25 ACN/H2O mixture. The components were separated using isocratic elution with refractive index detection. A Varian Microsorb-MV 100-3 Amino (100 x 4.6mm 3 μm) column and an Agilant 1200 G1362A RI detector with an RI temperature of 35 °C and an RI peak width of >0.2 min. were used.
The mole percentage of hydroxyl groups %-OH data were calculated from the HPLC-RI data according to the following equation (1):

$$\%-OH = \frac{\sum \%-OH_i * mol_i}{\sum mol_i} \tag{1}$$

where,

$$\%-OH_i = \left(\frac{M_{OH} * F_i}{M_{wi}}\right) * 100$$

*where* $M_{OH}$=17 g/mol.
where the subscript "i" refers to component i.
The molar mass of the samples was determined from the HPLC chromatograms and from the MALDI-ToF/MS spectra. The Mw values determined by HPLC-RI were calculated according to equation (2) below:

$$M_w = \frac{\sum M_{w_i} * area-\%_i}{\sum area-\%_i} \tag{2}$$

From the area % of each peak. The Mn values were calculated by dividing the total weight of the sample by the total number of molecules and it was assumed that the RI detector response of each peak (in area%) equals the wt%.
Samples for MALDI-ToF/MS analysis were prepared by dissolving the polyglycerine samples in THF, 2mg/ml. 20 mg dithranol /ml THF was used as the matrix and 1mg NaI/mL THF was used as the salt. The three solutions were then mixed in the ratio 1:2:1 prior to injection.
Samples for 13C-NMR were prepared by dissolving 2 g of the polyglycerine in 2 ml DMSO-d6 (containing 0.025M Cr(III) acetylacetonate) in a 10 mm NMR tube. Inverse gate 13C acquisitions were made to obtain semi-quantitative spectra.
Equivalent weight was calculated as Mn/Fi = EW. The EW differs when the Mn from HPLC-RI or MALDI-ToF/MS are used in the calculation. In both cases, Fi determined by the HPLC-RI method were used for calculating EW.

b. Test methods for foam properties

Density, resiliency, airflow and tear strength are measured according to ASTM 3574-05. CFD hardness and percent hysteresis are measured according to Peugeot D41.1003.386. Wet compression set with skin is measured in accordance with Renault RP 1637-81. Tensile strength and elongation at break are measured according to ISO 1798.

<u>POLYGLYCERINE EXAMPLES AND COMPARATIVE EXAMPLES</u>

Polyglycerine Examples PG-1, PG-2, PG-3 and PG-4 were produced in the presence of KOH (0.5 mol%) by the reaction of glycerin, as the initiator, and glycidol by glycidol polymerization in the ratios shown in Table 1.

Table 1

| Initiator Compounds | Description | Theoretical functionality, $F_{th}$ |
|---|---|---|
| 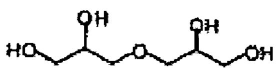 | PG-1: 1 mole glycerin + 1 mole glycidol | 4 |

(continued)

| Initiator Compounds | Description | Theoretical functionality, $F_{th}$ |
|---|---|---|
| 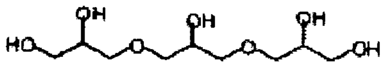 | PG-2: 1 mole glycerin + 2 mole glycidol | 5 |
| 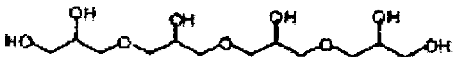 | PG-3: 1 mole glycerin + 3 mole glycidol | 6 |
| 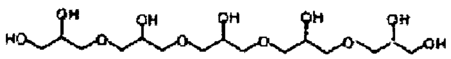 | PG-4: 1 mole glycerin + 4 mole glycidol | 7 |

The reactor temperature was maintained at about 100 °C.

Polyglycerin Example PG-5, which is a tetraglycerin average oligomer composition, was prepared by the condensation-of glycerin in the presence of 0.3%Na2CO3 at 245 °C.

Table 2 below summarizes the HPLC-RI data for example PG-2, including the degree of polymerization, theoretical functionality (F), molecular weight, wt% for the component peaks and the average functionality (i.e., 4.9) for the PG-2 example.

Table 2

| Peak | DP | F | Mw | Area counts | Area-%=wt | mol | F*mol | F |
|---|---|---|---|---|---|---|---|---|
| glycerin | 1 | 3 | 92.1 | 1,172,889 | 8.0 | 0.087 | 0.261 | |
| 2-gly | 2 | 4 | 166.2 | 2,878,916 | 19.7 | 0.119 | 0.474 | |
| 3-gly | 3 | 5 | 240.3 | 3,316,109 | 22.7 | 0.094 | 0.472 | |
| 4-gly | 4 | 6 | 314.3 | 2,825,466 | 19.3 | 0.061 | 0.369 | |
| 5-gly | 5 | 7 | 388.4 | 1,960,303 | 13.4 | 0.035 | 0.242 | |
| 6-gly | 6 | 8 | 462.5 | 1,201,342 | 8.2 | 0.018 | 0.142 | |
| 7-gly | 7 | 9 | 536.6 | 661,246 | 4.5 | 0.008 | 0.076 | |
| 8-gly | 8 | 10 | 610.7 | 330,718 | 2.3 | 0.004 | 0.037 | |
| 9-gly | 9 | 11 | 684.7 | 160,305 | 1.1 | 0.002 | 0.018 | |
| 10-gly | 10 | 12 | 758.8 | 76,100 | 0.5 | 0.001 | 0.008 | |
| 11-gly | 11 | 13 | 832.9 | 36,048 | 0.2 | 0.000 | 0.004 | |
| | | | | 14,619,443 | 100 | 0.429 | 2.103 | 4.9 |

Table 3 below summarizes the HPLC-RI data for example PG-4, including the degree of polymerization, theoretical functionality (F), molecular weight, wt% for the component peaks of the PG-4 example. The average functionality of the PG-4 example was 6.5.

Table 3

| PG-4-A | DP | F | Mw | Area counts | area-%=wt-% | mol | mol-% |
|---|---|---|---|---|---|---|---|
| Glycerin | 1 | 3 | 92.1 | 296260 | 2.3 | 0.025 | 8.9 |
| 2-gly | 2 | 4 | 166.2 | 889857 | 7.0 | 0.042 | 14.8 |
| 3-gly | 3 | 5 | 240.3 | 1447039 | 11.4 | 0.047 | 16.6 |
| 4-gly | 4 | 6 | 314.3 | 1829291 | 14.4 | 0.046 | 16.1 |
| 5-gly | 5 | 7 | 388.4 | 1885802 | 14.9 | 0.038 | 13.4 |
| 6-gly | 6 | 8 | 462.5 | 1737219 | 13.7 | 0.030 | 10.4 |
| 7-gly | 7 | 9 | 536.6 | 1462505 | 11.5 | 0.021 | 7.5 |

(continued)

| PG-4-A | DP | F | Mw | Area counts | area-%=wt-% | mol | mol-% |
|---|---|---|---|---|---|---|---|
| 8-gly | 8 | 10 | 610.7 | 1130683 | 8.9 | 0.015 | 5.1 |
| 9-gly | 9 | 11 | 684.7 | 802502 | 6.3 | 0.009 | 3.2 |
| 10-gly | 10 | 12 | 758.8 | 532156 | 4.2 | 0.006 | 1.9 |
| 11-gly | 11 | 13 | 832.9 | 351929 | 2.8 | 0.003 | 1.2 |
| 12-gly | 12 | 14 | 907.0 | 223238 | 1.8 | 0.002 | 0.7 |
| 13-gly | 13 | 15 | 981.1 | 108947 | 0.9 | 0.001 | 0.3 |
| | | | | | | | |
| Σ | | | | 12697430 | 100 | 0.286 | 100 |

Table 4 below summarizes the HPLC-RI data for comparative example PG-5, including the degree of polymerization, theoretical functionality (F), molecular weight, wt% for the component peaks and the average functionality (i.e., 4.7) for the PG-5 example.

Table 4

| PG-5 | DP | F | Mw | Area counts | area-%=wt-% | mol | mol-% |
|---|---|---|---|---|---|---|---|
| Glycerin | 1 | 3 | 92.1 | 1836058 | 13.2 | 0.144 | 30.5 |
| 2-gly | 2 | 4 | 166.2 | 3228250 | 23.3 | 0.140 | 29.7 |
| 3-gly | 3 | 5 | 240.3 | 2723074 | 19.6 | 0.082 | 17.3 |
| 4-gly | 4 | 6 | 314.3 | 1983123 | 14.3 | 0.045 | 9.7 |
| 5-gly | 5 | 7 | 388.4 | 1344827 | 9.7 | 0.025 | 5.3 |
| 6-gly | 6 | 8 | 462.5 | 919367 | 6.6 | 0.014 | 3.0 |
| 7-gly | 7 | 9 | 536.6 | 622256 | 4.5 | 0.008 | 1.8 |
| 8-gly | 8 | 10 | 610.7 | 437185 | 3.2 | 0.005 | 1.1 |
| 9-gly | 9 | 11 | 684.7 | 296409 | 2.1 | 0.003 | 0.7 |
| 10-gly | 10 | 12 | 758.8 | 196510 | 1.4 | 0.002 | 0.4 |
| 11-gly | 11 | 13 | 832.9 | 132835 | 1.0 | 0.001 | 0.2 |
| 12-gly | 12 | 14 | 907.0 | 76982 | 0.6 | 0.001 | 0.1 |
| 13-gly | 13 | 15 | 981.1 | 47991 | 0.3 | 0.000 | 0.1 |
| 14-gly | 14 | 16 | 1055.1 | 20982 | 0.2 | 0.000 | 0.0 |
| | | | | | | | |
| Σ | | | | 138,658,49 | 100.0 | 0.471 | 100 |

Table 5 below summarizes the HPLC-RI, MALDI-ToF, and NMR data for low mol weight, LMW- cyclic compounds, free monomer and branching of the PG-1, PG-2, PG-3, PG-4 and PG-5.

Table 5

| Sample | HPLC-RI | | NMR | | MALDI |
|---|---|---|---|---|---|
| | LMW-Cycliccompounds (wt%) | Free glycerin (wt%) | Branched end groups (mol%) | Primary OH (mol%) | Distribution |
| PG-1 | 0.9 | 23.3 | - | - | 1 |
| PG-2 | 1.5 | 8 | 24 | 45 | 1 |

(continued)

| Sample | HPLC-RI | | NMR | | MALDI |
|---|---|---|---|---|---|
| | LMW-Cyclic compounds (wt%) | Free glycerin (wt%) | Branched end groups (mol%) | Primary OH (mol%) | Distribution |
| PG-3 | 1.0 | 4.2 | 24 | 47 | 1 |
| PG-4 | 1.0 | 2.3 | - | - | 1 |
| PG-5 | 10.1 | 12.3 | 28 | 59 | 2 |

As is apparent from Table 5 the amount of cyclic compounds is significantly lower in examples PG-1 through PG-4 than in example PG-5. Moreover, the free monomer (i.e., glycerin) is lower in PG-2, PG-3 and PG-4 than in the example PG-5. PG-5 contains less amount of primary OH which demonstrates less linearity in comparison with PG-1, PG-2, PG-3 and PG-4.

POLYGLYCERINE INITIATED POLYOL PRODUCTION

Polyglycerin initiated polyoxypropylene polyols were prepared by propoxylating the polyglycerine initiators, using KOH catalysts and capping them with about 16.0 wt% ethylene oxide, temperature 130 °C. KOH end batch amount about 2000 ppm. Hydroxyl equivalent weights (HEW) of about 1902 were obtained simulating the VORALUX™ HF505 elsewhere described.

Table 6 summarizes the hydroxyl numbers, nominal and real functionalities for the final polyols initiated with PG-2, PG-4 and PG-5 respectively. Properties of Voralux HF-505 are also included for comparative purposes.

Table 6

| Sample | Hydroxyl Number, mg/g | Nominal Functionality | Real Functionality | Viscosity, 25 ° cSt |
|---|---|---|---|---|
| PL-PG2 | 28.0 | 4.9 | 2.9 | 1430 |
| PL-PG4 | 26.8 | 6.5 | 4.2 | 1580 |
| PL-PG5 | 28.6 | 4.7 | 2.7 | 1330 |
| HF505 | 29.5 | 5.4 | 3.4 | 1500 |

POLYURETHANE EXAMPLES AND COMPARATIVE EXAMPLES

Flexible polyurethane foams were produced utilizing the polyols PL-PG2, PL-PG4 and PL-PG5 combined with other polyols, including SAN copolymer polyols. Comparative examples utilized Voralux HF-505 as shown and described below.

A description of the raw materials used in the examples is as follows. SPECFLEX™ NC 632 is a 1,700 equivalent weight polyoxypropylene polyoxyethylene polyol initiated with a blend of glycerol and sorbitol, available from The Dow Chemical Company. SPECFLEX™ NC700 is a grafted polyether polyol containing 40% SAN based copolymer polyol, available from The Dow Chemical Company. VORALUX™ HF505 is a sorbitol initiated polyoxypropylene polyol capped with about 16 wt% ethylene oxide having a hydroxyl equivalent weight of about 1902, and is available from The Dow Chemical Company. DEOA is dliethanolamine 99% available from Aldrich Company. DABCO 33LV is a 33 wt% solution of triethylenediamine in propylene glycol, available from Air Products and Chemicals, Inc. NIAX™ A-1 is a tertiary amine catalyst available from Momentive Performance Materials. NIAX™ A-300 is a tertiary amine catalyst available from Momentive Performance Materials. TEGOSTAB™ B8715LF is a silicon-based surfactant available from the Evonik Industries. TEGOSTAB™ B8719LF is a silicon-based surfactant available from the Evonik Industries. SPECFLEX™ TM 20 is a 80% Voranate T-80 (80wt% 2,4 TDI and 20wt% 2,6 TDI) and 20%Voranate M-229 (a polymeric MDI) by weight blend, available from The Dow Chemical Company. VORANOL™ CP 1421 is a glycerol initiated polyoxyethylene polyol having an average hydroxyl number of 32, available from The Dow Chemical Company. ORTEGOL 204 is a block stabilizer available from Evonik Industries. KOSMOS 54 is a zinc ricinoleate catalyst available from the Evonik Industries. TEGOSTAG™ B8681 is a foam stabilizer based on polysiloxane-polyether commercially available from Goldschmidt AG. VORANATE™ T80 is an 80/20 blend of the 2,4 and 2,6 TDI isomers, available from The Dow Chemical Company. ORTEGOL™ 204 is a proprietary crosslinker containing water, available from Evonik Industries.

Tables 7-9 illustrate several high resilient polyether polyol based foams including examples formed utilizing the

polyglycerine initiated polyols, PL- PG's, of the present invention and comparative examples. Each of the foams of examples 1 through 5 was molded foams obtained from hand mixed runs.

Table 7

| | Comp.Ex.1 | Ex.1 | Ex.2 | Ex. 3 | Ex. 4 | Ex. 5 |
|---|---|---|---|---|---|---|
| Specflex NC632 | | | 10 | | | 10 |
| Specflex NC700 | 30 | 30 | 30 | 30 | 30 | 30 |
| Voralux HF505 | 70 | | | | | |
| PL-PG-5 | | 70 | 60 | | | |
| PL-PG-2 | | | | 70 | | 60 |
| PL-PG-4 | | | | | 70 | |
| Water | 3.0 | 3.0 | 3.0 | 3.0 | 3.0 | 3.0 |
| DEOA 99% | 0.7 | 0.7 | 0.7 | 0.7 | 0.7 | 0.7 |
| Dabco 33LV | 0.3 | 0.3 | 0.3 | 0.3 | 0.3 | 0.3 |
| Niax A-1 | 0.05 | 0.05 | 0.05 | 0.05 | 0.05 | 0.05 |
| Niax A-300 | 0.1 | 0.1 | 0.1 | 0.1 | 0.1 | 0.1 |
| Tegostab B8715LF | 0.5 | 0.5 | 0.5 | 0.5 | 0.5 | 0.5 |
| Tegostab B8719LF | 0.2 | 0.2 | 0.2 | 0.2 | 0.2 | 0.2 |
| Specflex TM20 Index | 100 | 100 | 100 | 100 | 100 | 100 |
| Mold exit time (sec) | NA | 36 | 31 | 35 | 33 | 33 |
| Demolding Time (min) | 6 | 6 | 6 | 6 | 6 | 6 |
| Part weight (g) | 455 | 453 | 447 | 454 | 467 | 453 |
| Core dens. | 47.1 | 47.7 | 45 | 47.1 | 47.3 | 45.9 |
| 50% CFD (Kpa) | 7.3 | 6.1 | 5.8 | 6.2 | 7.4 | 6.0 |
| % hysteresis | 78.2 | 78.0 | 80.2 | 79.6 | 79.1 | 80.3 |
| Sag factor | 2.7 | 2.8 | 2.7 | 2.8 | 2.6 | 2.7 |
| Airflow (cfm) | 3.6 | 4.3 | 4.1 | 4.3 | 3.5 | 3.6 |
| Resiliency (%) | 65 | 63 | 70 | 69 | 66 | 69 |
| 70% Wet CS skin | 38.7 | 40.1 | 38.9 | 38.9 | 33.6 | 36.3 |
| 50% CS (CD) | 7.5 | 8.1 | 6.0 | 8.4 | 7.6 | 6.7 |
| 75% CS (CD) | 7.1 | 6.9 | 5.6 | 6.7 | 6.0 | 5.9 |
| Tensile Strength (Kpa) | 149 | 151 | 138 | 148 | 138 | 147 |
| Elongation (%) | 96 | 107 | 99 | 104 | 90 | 108 |
| Tear Strength (N/m) | 254 | 285 | 286 | 278 | 227 | 278 |

Table 7 illustrates that foams made from polyglycerine initiated polyols PL-PG 2, PL-PG-4 and PL-PG5 have comparable or higher TTE values than the comparative foams based on Voralux* HF 505, e.g., Comparative Ex. 1. Of importance are the improved foam Tear Strength properties exhibiting less tearing when making automotive seats. In addition, increased foam airflow values comfirm the good processing of these molded pads.

The foams illustrated in Tables 8 and 9 are free rise foams produced by hand mixing. Examples 6 to 15 illustrate that foams made from polyglycerine polyols are at least equal and in many cases superior in TTEs in comparison to the comparative example foams produced using Voralux HF 505, e.g., Comparative Example 2, at equivalent foam hardness ( 50 % CFD values) and have improved foam resiliency. Thus, a fine tuning of the polyglycerine initiator structure can be applied to optimize and improve foam properties, including those properties useful in the handling and transportation

of cubic meter sized slabstock foam wherein costly damage from tearing is preferably avoided and/or minimized.

Table 8

| | Comp.Ex.2 | Ex. 6 | Ex.7 | Ex. 8 | Ex. 9 | Ex. 10 |
|---|---|---|---|---|---|---|
| Specflex NC632 | | | 10 | | | 10 |
| Voralux HL400 | 35 | 35 | 35 | 35 | 35 | 35 |
| Voralux HF505 | 65 | | | | | |
| PL-PG-5 | | 65 | 55 | | | |
| PL-PG-2 | | | | 65 | | 55 |
| PL-PG-4 | | | | | 65 | |
| Voranol CP 1421 | 0.5 | 0.5 | 0.5 | 0.5 | 0.5 | 0.5 |
| Ortegol 204 | 1.8 | 1.8 | 1.8 | 1.8 | 1.8 | 1.8 |
| Water | 2.1 | 2.1 | 2.1 | 2.1 | 2.1 | 2.1 |
| DEOA 99% | 0.6 | 0.6 | 0.6 | 0.6 | 0.6 | 0.6 |
| Dabco 33LV | 0.08 | 0.08 | 0.08 | 0.08 | 0.08 | 0.08 |
| Niax A-1 | 0.03 | 0.03 | 0.03 | 0.03 | 0.03 | 0.03 |
| Kosmos 54 | 0.5 | 0.5 | 0.5 | 0.5 | 0.5 | 0.5 |
| Tegostab B8681 | 0.5 | 0.5 | 0.5 | 0.5 | 0.5 | 0.5 |
| Stannous Octoate | 0.1 | 0.1 | 0.1 | 0.1 | 0.1 | 0.1 |
| Voranate T80 Index | 105 | 105 | 105 | 105 | 105 | 105 |
| Core dens. | 35.4 | 36.1 | 36.1 | 36.1 | 36.8 | 36.1 |
| 50% CFD (KPa) | 4.5 | 4.5 | 4.5 | 4.6 | 4.9 | 4.4 |
| % Hysteresis | 68.2 | 69.9 | 69.8 | 69.5 | 69.3 | 70 |
| Sag factor | 2.8 | 2.8 | 2.8 | 2.8 | 2.8 | 2.8 |
| Airflow (cfm) | 0.9 | 0.9 | 0.9 | 0.5 | 0.9 | 0.9 |
| Resiliency (%) | 48 | 49 | 49 | 49 | 47 | 50 |
| 50% CS (CD) | 8.7 | 9.6 | 9.6 | 9.4 | 8.9 | 10.1 |
| 75% CS (CD) | 6.9 | 8.4 | 7.6 | 7.4 | 7.6 | 7.9 |
| Tensile Strength (Kpa) | 99 | 114 | 119 | 99 | 94 | 115 |
| Elongation (%) | 116 | 131 | 138 | 120 | 112 | 136 |
| Tear Strength (N/m) | 266 | 310 | 293 | 297 | 262 | 299 |

Table 9

| | Comp.Ex.3 | Ex.11 | Ex.12 | Ex. 13 | Ex. 14 | Ex. 15 |
|---|---|---|---|---|---|---|
| Specflex NC632 | | | 10 | | | 10 |
| Voralux HL400 | 50 | 50 | 40 | 50 | 50 | 40 |
| Voralux HF505 | 50 | | | | | |
| PL-PG-5 | | 50 | 50 | | | |
| PL-PG-2 | | | | 50 | | 50 |
| PL-PG-4 | | | | | 50 | |

(continued)

| | Comp.Ex.3 | Ex.11 | Ex.12 | Ex. 13 | Ex. 14 | Ex. 15 |
|---|---|---|---|---|---|---|
| Voranol CP1421 | 0.5 | 0.5 | 0.5 | 0.5 | 0.5 | 0.5 |
| Ortegol 204 | 1.8 | 1.8 | 1.8 | 1.8 | 1.8 | 1.8 |
| Water | 2.1 | 2.1 | 2.1 | 2.1 | 2.1 | 2.1 |
| DEOA 99% | 0.6 | 0.6 | 0.6 | 0.6 | 0.6 | 0.6 |
| Dabco 33LV | 0.08 | 0.08 | 0.08 | 0.08 | 0.08 | 0.08 |
| Niax A-1 | 0.03 | 0.03 | 0.03 | 0.03 | 0.03 | 0.03 |
| Kosmos 54 | 0.5 | 0.5 | 0.5 | 0.5 | 0.5 | 0.5 |
| Stannous Octoate | 0.5 | 0.5 | 0.5 | 0.5 | 0.5 | 0.5 |
| Tegostab B8681 | 0.1 | 0.1 | 0.1 | 0.1 | 0.1 | 0.1 |
| Voranate T80 Index | 110 | 110 | 110 | 110 | 110 | 110 |
| Core dens. | 33.9 | 35.3 | 35.3 | 34.8 | 35.4 | 35.6 |
| 50% CFD (Kpa) | 5.9 | 5.9 | 5.1 | 5.9 | 6.1 | 5.2 |
| % hysteresis | 62.2 | 64 | 67.4 | 63.3 | 64.31 | 70 |
| Sag factor | 2.9 | 2.8 | 2.8 | 2.8 | 2.8 | 2.8 |
| Airflow (cfm) | 1.6 | 1.3 | 1.3 | 1.5 | 1.2 | 1.3 |
| Resiliency (%) | 42 | 45 | 49 | 44 | 44 | 48 |
| 50% CS (CD) | 11.8 | 10.9 | 10.2 | 12.1 | 11.6 | 10.8 |
| 75% CS (CD) | 9.8 | 9.5 | 8.2 | 9.2 | 9.8 | 8.7 |
| Tensile Strength (Kpa) | 130 | 142 | 124 | 134 | 132 | 114 |
| Elongation (%) | 115 | 125 | 125 | 118 | 116 | 119 |
| Tear Strength (N/m) | 341 | 369 | 320 | 388 | 356 | 343 |

**Claims**

1. A polyglycerine alkoxylated polyether polyol having an equivalent weight of from 800 to 4,000, wherein the polyglycerine alkoxylated polyether polyol is formed by the base catalyzed addition of an alkylene oxide onto a polyglycerine initiator exhibiting a range of functionalities varying between 2 and 16 and having an average nominal functionality between 3 and 7 formed by the polymerization of glycerine, having an HEW more than 35, wherein the polyglycerine alkoxylated polyether polyol has a final functionality between 1.5 and 6, and an unsaturation between 0.02 meq/g and 1.0 meq/g.

2. The polyglycerine alkoxylated polyether polyol of claim 1, wherein the alkylene oxide is propylene oxide, ethylene oxide, or a combination of propylene and ethylene oxides.

3. The polyglycerine alkoxylated polyether polyol of claim 1, wherein the polyglycerine initiator comprises at least three different nominal functionalities.

4. The polyglycerine alkoxylated polyether polyol of claim 1, having a final average functionality between 2 and 5.

5. A process for producing a polyurethane polymer by reaction of a mixture comprising: a polyol comprising between 5 wt% and 100 wt% of the polyglycerine alkoxylated polyether polyol of claim 1; at least one organic isocyanate; and an amine and/or metal salt catalyst.

6. The process of claim 5, wherein the reaction occurs in the presence of a blowing agent and the polyurethane polymer

is produced in the form of a polyurethane flexible foam.

7. A process for optimizing physical properties of a flexible polyurethane foam by adjusting an average functionality and polydispersity of a polyglycerine initiator, by adjusting processing conditions, by adjusting alkylene oxide composition; or by a combination of any of the foregoing adjustments during production of a polyglycerine alkoxylated polyether polyol used to produce the flexible polyurethane foam.

8. The process of claim 7, wherein the optimized physical properties are one or more of foam tear, tensile strength, and elongation.

9. The process of claim 7, wherein the polyglycerine is formed by the polycondensation of glycerine at temperatures higher than 210 °C.

10. The process of claim 7, wherein the polyglycerine is formed by the glycidol polymerization of glycerine at temperatures less than 130 °C.

11. The process of claim 7, wherein the polyglycerine initiator is made by reacting glycerine and glycidol with an aminoalcohol having at least one tertiary amine moiety.

12. The flexible polyurethane foam of claim 7, wherein the foam is a slabstock foam.

**Patentansprüche**

1. Ein Polyglycerin-alkoxyliertes Polyetherpolyol, das ein Äquivalentgewicht von 800 bis 4000 aufweist, wobei das Polyglycerin-alkoxylierte Polyetherpolyol gebildet wird durch die basenkatalysierte Addition eines Alkylenoxids auf einen Polyglycerininitiator, der einen zwischen 2 und 16 variierenden Bereich von Funktionalitäten vorweist und eine durchschnittliche nominale Funktionalität zwischen 3 und 7 aufweist, gebildet durch die Polymerisation von Glycerin, mit einem HEW von mehr als 35, wobei das Polyglycerin-alkoxylierte Polyetherpolyol eine endgültige Funktionalität zwischen 1,5 und 6 und eine Ungesättigtheit zwischen 0,02 meq/g und 1,0 meq/g aufweist.

2. Polyglycerin-alkoxyliertes Polyetherpolyol gemäß Anspruch 1, wobei das Alkylenoxid Propylenoxid, Ethylenoxid oder eine Kombination von Propylen- und Ethylenoxiden ist.

3. Polyglycerin-alkoxyliertes Polyetherpolyol gemäß Anspruch 1, wobei der Polyglycerininitiator mindestens drei unterschiedliche nominale Funktionalitäten beinhaltet.

4. Polyglycerin-alkoxyliertes Polyetherpolyol gemäß Anspruch 1, das eine endgültige durchschnittliche Funktionalität zwischen 2 und 5 aufweist.

5. Ein Verfahren zum Produzieren eines Polyurethanpolymers durch die Reaktion einer Mischung, die Folgendes beinhaltet: ein Polyol, das zu zwischen 5 Gew.-% und 100 Gew.-% das Polyglycerin-alkoxylierte Polyetherpolyol gemäß Anspruch 1 beinhaltet; mindestens ein organisches Isocyanat; und einen Amin- und/oder Metallsalzkatalysator.

6. Verfahren gemäß Anspruch 5, wobei die Reaktion in Gegenwart eines Treibmittels stattfindet und das Polyurethanpolymer in der Form eines Polyurethanweichschaumstoffs produziert wird.

7. Ein Verfahren zum Optimieren der physikalischen Eigenschaften eines Polyurethanweichschaumstoffs durch Anpassen einer durchschnittlichen Funktionalität und Polydispersität eines Polyglycerininitiators, durch Anpassen von Verarbeitungsbedingungen, durch Anpassen einer Alkylenoxidzusammensetzung; oder durch eine Kombination beliebiger der vorgenannten Anpassungen während der Produktion eines Polyglycerin-alkoxylierten Polyetherpolyols, das zum Produzieren des Polyurethanweichschaumstoffs verwendet wird.

8. Verfahren gemäß Anspruch 7, wobei die optimierten physikalischen Eigenschaften eine oder mehrere von Reißen, Zugfestigkeit und Dehnung des Schaumstoffs sind.

9. Verfahren gemäß Anspruch 7, wobei das Polyglycerin durch die Polykondensation von Glycerin bei Temperaturen

von mehr als 210 °C gebildet wird.

10. Verfahren gemäß Anspruch 7, wobei das Polyglycerin durch die Gycidolpolymerisierung von Glycerin bei Temperaturen von weniger als 130 °C gebildet wird.

11. Verfahren gemäß Anspruch 7, wobei der Polyglycerininitiator durch Zur-Reaktion-Bringen von Glycerin und Glycidol mit einem Aminoalkohol, der mindestens einen tertiären Aminanteil aufweist, hergestellt wird.

12. Polyurethanweichschaumstoff gemäß Anspruch 7, wobei der Schaumstoff ein Blockschaumstoff ist.

**Revendications**

1. Un polyol de polyéther alcoxylé par polyglycérine ayant un poids équivalent allant de 800 à 4 000, le polyol de polyéther alcoxylé par polyglycérine étant formé par l'ajout catalysé par une base d'un oxyde d'alkylène sur un initiateur polyglycérine présentant une gamme de fonctionnalités variant entre 2 et 16 et ayant une fonctionnalité nominale moyenne comprise entre 3 et 7 formé par la polymérisation de glycérine, ayant un PEH de plus de 35, le polyol de polyéther alcoxylé par polyglycérine ayant une fonctionnalité finale comprise entre 1,5 et 6, et une insaturation comprise entre 0,02 méq/g et 1,0 méq/g.

2. Le polyol de polyéther alcoxylé par polyglycérine de la revendication 1, dans lequel l'oxyde d'alkylène est l'oxyde de propylène, l'oxyde d'éthylène, ou une combinaison d'oxydes de propylène et d'éthylène.

3. Le polyol de polyéther alcoxylé par polyglycérine de la revendication 1, dans lequel l'initiateur polyglycérine comprend au moins trois fonctionnalités nominales différentes.

4. Le polyol de polyéther alcoxylé par polyglycérine de la revendication 1, ayant une fonctionnalité moyenne finale comprise entre 2 et 5.

5. Un procédé pour produire un polymère de polyuréthane par réaction d'un mélange comprenant : un polyol comprenant entre 5 % en poids et 100 % en poids du polyol de polyéther alcoxylé par polyglycérine de la revendication 1 ; au moins un isocyanate organique ; et un catalyseur amine et/ou sel métallique.

6. Le procédé de la revendication 5, dans lequel la réaction a lieu en présence d'un agent gonflant et le polymère de polyuréthane est produit sous la forme d'une mousse souple de polyuréthane.

7. Un procédé pour optimiser des propriétés physiques d'une mousse de polyuréthane souple en ajustant une fonctionnalité moyenne et la polydispersité d'un initiateur polyglycérine, en ajustant des conditions de traitement, en ajustant la composition d'oxyde d'alkylène ; ou par une combinaison de n'importe lesquels des ajustements qui précèdent durant la production d'un polyol de polyéther alcoxylé par polyglycérine utilisé pour produire la mousse de polyuréthane souple.

8. Le procédé de la revendication 7, dans lequel les propriétés physiques optimisées sont une ou plusieurs propriétés parmi la résistance à la déchirure, à la traction, et l'allongement de la mousse.

9. Le procédé de la revendication 7, dans lequel la polyglycérine est formée par la polycondensation de glycérine à des températures supérieures à 210 °C.

10. Le procédé de la revendication 7, dans lequel la polyglycérine est formée par la polymérisation par glycidol de glycérine à des températures de moins de 130 °C.

11. Le procédé de la revendication 7, dans lequel l'initiateur polyglycérine est réalisé en faisant réagir de la glycérine et du glycidol avec un aminoalcool ayant au moins un groupement amine tertiaire.

12. La mousse de polyuréthane souple de la revendication 7, la mousse étant une mousse en bloc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6710096 B
- JP 2005232382 B
- JP 4010174 B
- JP 44011671 B
- DE 1814923
- DE 1109649
- US 20100029799 A
- US 20090082483 A


### Non-patent literature cited in the description


- **G. OETEL et al.** Polyurethane Handbook. Hanser publisher, 1994